# EUROPEAN PATENT APPLICATION

(11) **EP 4 467 219 A1**
(43) Date of publication of application: **27.11.2024**
(21) Application number: 22936642.2
(22) Date of filing: 18.10.2022
(51) Int. Cl.: B01D 33/44, B01D 33/23

(54) **SEPARABLE TWO-STAGE VERTICAL SUCTION CLEANING APPARATUS AND FIBER DISK FILTER INCLUDING SAME**

(30) Priority: 07.04.2022 KR 20220043242
(71) Applicant: Yucheon Enviro Co., Ltd., Incheon 21697 (KR)
(72) Inventor: MOON, Chan Yong, Seoul 06291 (KR)
(74) Representative: BCKIP Part mbB
(86) International application number: PCT/KR2022/015819
(87) International publication number: WO 2023/195589

(57) **Abstract**

The present invention relates to: a separable two-stage vertical suction cleaning apparatus in which two suction holders are configured in a vertical two-stage structure to make it possible to reduce the gap between two disks; and a fiber disk filter including same. Provided are a separable two-stage vertical suction cleaning apparatus and a fiber disk filter including same, wherein the suction cleaning apparatus, which is disposed between two disks and removes sludge collected in filter cloths of the disks, comprises: a first suction holder which has a first suction hole and is disposed such that the first suction hole faces the filter cloth of one of the two disks; a second suction holder which has a second suction hole for suctioning sludge and is disposed such that the second suction hole faces the filter cloth of the other of the two disks; a support provided above the first suction holder in order to support the first suction holder and the second suction holder; a first link mechanism connecting the support and the first suction holder such that the first suction holder moves toward or away from the filter cloth of the one disk while supported by the support; and a second link mechanism connecting the support and the second suction holder such that the second suction holder moves from below the first suction holder toward or away from the filter cloth of the other disk while supported by the support.

## Description

### [Field of the Invention]

The present invention relates to a suction cleaning apparatus for suction and removal of sludge collected in a filter cloth and a fiber disk filter comprising the same. In more detail, the present invention relates to a vertically separated two-stage suction cleaning apparatus, in which two suction holders configured independently and arranged in two-stage structure are disposed between the two adjacent disks, one suction holder being configured to suck and remove sludge collected on one side of the disk and the other suction holder being configured to suck and remove sludge collected on the other side of the disk, whereby smooth operation can be achieved and the spacing between the disks can be reduced so that the volume of the fiber disk filter and the area of the site required for the installation of the fiber disk filter can be reduced.

### [Description of the Related Art]

In general, a fiber disk filter is installed in a water channel or water tank where liquid such as wastewater, sewage, purified water, rainwater and process water (hereinafter referred to as 'inflow water') is inflowed and filters the sludge contained in the inflow water.

The fiber disk filter is equipped with disks installed on a rotating drum at regular intervals in the longitudinal direction, the disk having a plurality of filter segments on both sides thereof, and filter segments having a filter cloth with a surface made of villi. As inflow water flows through the filter cloth and into the filter segment, sludge is filtered by the villi, and treated water from which sludge has been removed is made to flow into the rotating drum and then discharged to a predetermined place.

In this way, the filtration process proceeds as inlet water flows through the filter cloth into the filter segment, so that sludge is collected on the filter cloth constituting the filter segment.

Meanwhile, the sludge collected on the filter cloth forms a layer on the filter cloth, slowing down the filtration speed, reducing the filtration efficiency of the filter cloth, and inducing a rapid rise in the water level of water channel or water tank, which acts as a bad cause of shortening the cleaning cycle.

Accordingly, a cleaning apparatus for removing the sludge collected on the filter cloth is included in the fiber disk filter.

The cleaning apparatus uses an injection method to remove the sludge by spraying high-pressure water onto the filter cloth or a suction method to remove the sludge by suctioning the collected sludge.

The spray cleaning apparatus comprises a spray nozzle disposed at a certain distance from the surface of the filter cloth and a pump connected to the spray nozzle to supply water to the spray nozzle.

The suction cleaning apparatus comprises a suction holder with a long slit-shaped suction port formed in a rectangular shape, and a suction cleaning pump connected to the suction holder to provide suction force.

An example of the suction cleaning apparatus is disclosed in Patent Document 1.

In the case of the suction cleaning apparatus disclosed in Patent Document 1, two suction holders are arranged so that they are located on the same horizontal level between the adjacent disks, where one of the suction holders is installed to suck sludge in close contact with the side of the disk on one side, and the other suction holder is installed to suck sludge in close contact with the side of the other disk.

As such, in the conventional suction cleaning apparatus, as the two suction holders located between the two adjacent disks are placed on the same horizontal level at the same height, the two adjacent disks must be sufficiently spaced apart to secure space for placing the two suction holders between them.

In addition, in the conventional suction cleaning apparatus, the suction holder is always in close contact with the surface of the filter cloth regardless of whether the cleaning process proceeds or not so that the suction holder presses the sludge collected on the filter cloth to penetrate deep into the villi deteriorating suction cleaning efficiency.

### (Documents of Related Art)

### (Patent documents)

(Patent Document 1) Registered Patent Gazette No. 10-2264455 (2021.06.11.)

### DESCRIPTION OF THE INVENTION

### [Technical Problem to be Solved]

The present invention has been made in consideration of the above problems, and the purpose of the present invention is to provide a suction cleaning apparatus and a fiber disk filter including the same, which can reduce the gap between the disks by installing the two suction holders between the adjacent disks on the different horizontal level in an upper and lower two-stage structure.

Another object of the present invention is to provide a separable two-stage vertical suction cleaning apparatus consisting of two suction holders moving independently and being in close contact with or separated from the surface of the disk and a fiber disk filter comprising the same.

### [Technical Solution]

The present invention, which achieves the above purpose and performs a task for removing conventional defects, provides a suction cleaning apparatus that is disposed between two adjacent disks 200a and 200b configured in a fiber disk filter to suck and remove sludge collected in the filter cloth of the disks, the suction cleaning apparatus comprising: a first suction holder having a first suction port for suctioning sludge, the first suction holder disposed to have a structure in which the first suction port faces the filter cloth of one of the two adjacent disks; a second suction holder having a second suction port for suctioning sludge, the second suction holder disposed to have a structure in which the second suction port faces the filter cloth of the other one of the two adjacent disks; a supporter for supporting the first suction holder and the second suction holder in a horizontal position; a first link mechanism connecting the first suction holder located under the supporter to the supporter in a way that the first suction holder can move in a direction close to or away from the filter cloth of the one of the two adjacent disks; and a second link mechanism connecting the second suction holder located under the supporter to the supporter in a way that the second suction holder disposed below the first suction holder can move in a direction close to or away from the filter cloth of the other one of the two adjacent disks.

In the suction cleaning apparatus according to the present invention, the second link mechanism comprises a pair of second links having a two-stage bent shape to connect the supporter and the second suction holder, wherein the second link comprises: a first vertical portion extending from the supporter to a height corresponding to a space between the first suction holder 110 and the second suction holder 120 through a space around the side of the first suction holder; a horizontal portion extending horizontally from the lower end of the first vertical portion into a space between the first suction holder and the second suction holder; and a second vertical portion extending from the end of the horizontal portion to the upper part of the second suction holder to be connected to the second suction holder.

In the suction cleaning apparatus according to the present invention, the first suction holder and the second suction holder 120 are configured to be close contact with the filter cloths by suction force formed in the suction ports thereof when suction cleaning is carried out, and to be separated from the filter cloth by their own weight when suction cleaning is not carried out.

In addition, the present invention provides a fiber disk filter comprising: a plurality of filter segments having filter cloths installed on the front and rear sides; a plurality of disks having the plurality of filter segments arranged in the circumferential direction; a rotating drum having the plurality of disks installed at regular intervals in the longitudinal direction; a driving unit to drive the rotating drum; and a suction cleaning apparatus according to any one of claims 1 to 3 disposed between the two adjacent disks.

### [Effects of the Invention]

According to the present invention having the above characteristics, the first suction holder and the second suction holder are arranged in an upper and lower two-stage structure to reduce the gap between the disks required for the installation of the first and second suction holders, so that the volume of the fiber disk filter and the area of the site required for the installation of the fiber disk filter can be significantly reduced.

In addition, the suction holder is separated from the filter cloth at normal times (when suction cleaning is not performed) and has no effect on the sludge collected on the filter cloth, and is in close contact with the filter cloth only while suction cleaning process is performed, so that cleaning efficiency may be improved, the quality of treated water may be secured, and an effect of extending the life of the filter cloth may be expected.

In addition, since the first suction holder and the second suction holder can move independently without interference with each other, the smooth operation of the first suction holder and the second suction holder is possible, and each suction holder stably adheres to the surface of the filter cloth, thereby improving the cleaning effect.

### [Brief Description of the Drwaings]

FIG. 1 is a perspective view of the suction cleaning apparatus according to a preferred embodiment of the present invention,
FIG. 2 is the front view of a fiber disk filter to which a suction cleaning apparatus according to the present invention is applied,
FIG. 3 is the front view of the suction cleaning apparatus according to a preferred embodiment of the present invention,
FIG. 4 is a side view showing that the suction cleaning apparatus according to the present invention is installed between the disk and the disk,
FIG. 5 is a side view in which the first suction holder and the second suction holder according to the present invention are in close contact with the filter cloth.

### Explanation of Signs

**Explanation of Reference Numerals**

| | | | |
|---|---|---|---|
| 100: | suction cleaning apparatus | 110: | first suction holder |
| 111: | first suction port | 120: | second suction holder |
| 121: | second inlet | 130: | first link mechanism |
| 131: | first link | 140: | second link mechanism |
| 141: | second Link | 1411: | first vertical portion |
| 1412: | horizontal portion | 1413: | second vertical portion |
| 150: | Supporter | 200: | disk |
| 210: | filter segment | 300: | rotating drum |
| 400: | driving unit | | |

### DETAILED DESCRIPTION OF THE EMBODIMENT

Hereinafter, preferred embodiments of the present invention are described in detail in connection with the attached drawings. In describing the present invention, if it is determined that a detailed description of a related known function or configuration may unnecessarily obscure the gist of the present invention, the detailed description thereof will be omitted.

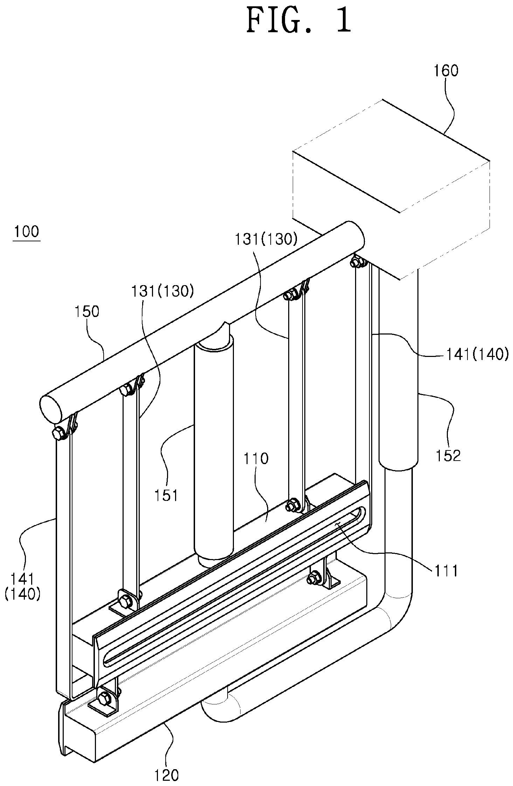

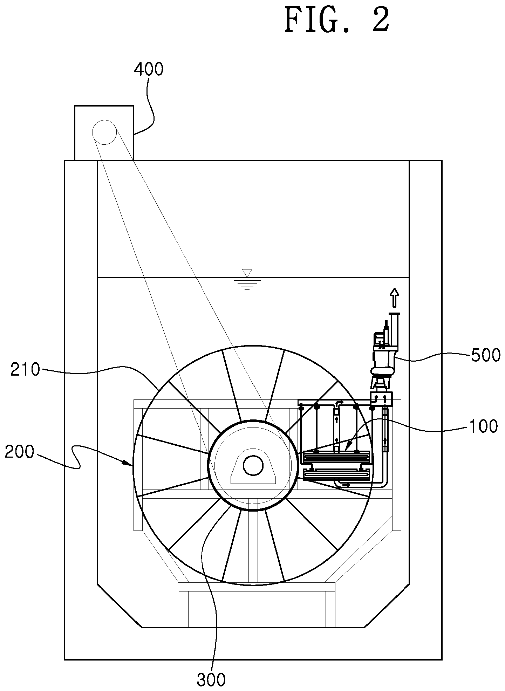

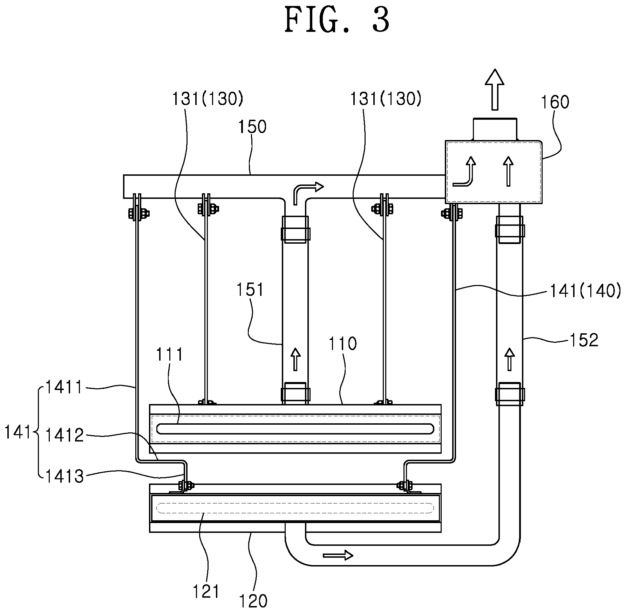

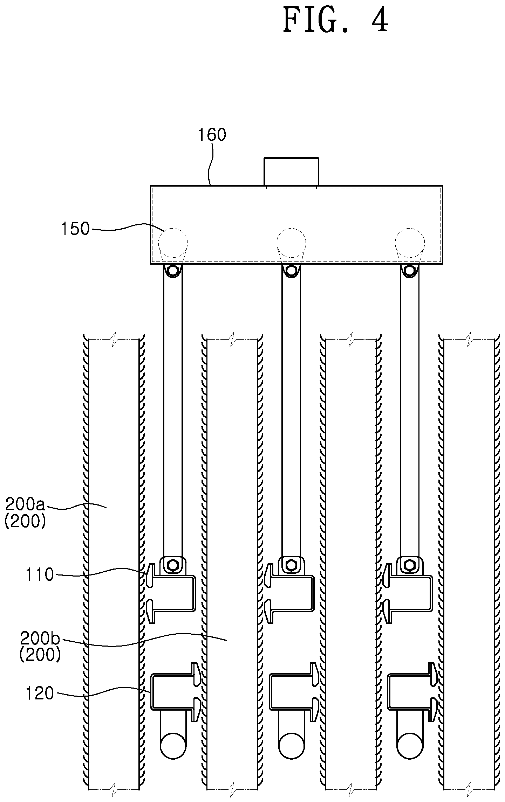

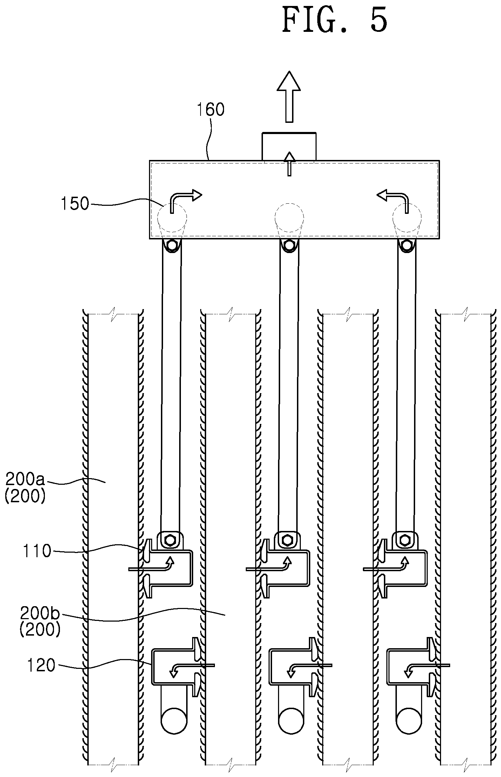

FIG. 1 shows a perspective view of the suction cleaning apparatus according to a preferred embodiment of the present invention, FIG. 2 shows the front view of the fiber disk filter to which a suction cleaning apparatus according to the present invention is applied, FIG. 3 shows the front view of the suction cleaning apparatus according to a preferred embodiment of the present invention, FIG. 4 shows a side view showing that the suction cleaning apparatus according to the present invention is installed between the disk and the disk, and FIG. 5 shows a side view showing that the first suction holder and the second suction holder according to the present invention are in close contact with the filter cloth.

The separable two-stage vertical suction cleaning apparatus 100 according to the present invention is disposed between two adjacent disks 200a and 200b to suck and remove sludge collected in the filter cloth of the disks 200a and 200b, and comprises a first suction holder 110, a second suction holder 120, a supporter 150, a first link mechanism 130, and a second link mechanism 140.

The first suction holder 110 is configured in the form of a box having a first suction port 111 on one side thereof and disposed to have a structure in which the first suction port 111 faces the filter cloth of one of the two adjacent disks 200a and 200b. The first suction port 111 has a rectangular shape that extends in the horizontal direction.

The second suction holder 120 is configured in the form of a box having a second suction port 121 on one side thereof and disposed to have a structure in which the second suction port 121 faces the filter cloth of the other one of the two adjacent disks 200a and 200b. The second suction port 121 has a rectangular shape that extends in the horizontal direction.

The first suction holder 110 and the second suction holder 120 have the same length, and the second suction holder 120 is disposed under the first suction holder 110 so that the first and second suction holders 110, 120) form a two-stage upper and lower structure to suck and remove sludge collected on the filter cloth of the two adjacent disks 200a, 200b.

A supporter 150 in a horizontal posture is provided above the first suction holder 110, and the supporter 150 is connected to the first suction holder 110 and the second suction holder 120 via the first link mechanism 130 and the second link mechanism 140 respectively.

The first link mechanism 130 configured to support the first suction holder 110 to move in a way that the first suction holder 110 can move in a direction close to or away from the filter cloth of the one of the two adjacent disks 200a. The first link mechanism 130 comprises a pair of first links 131, the upper end of the first link 131 being hinge-coupled to the supporter 150 and the lower end of the first link 131 being hinge-coupled to the upper part of the first suction holder 110.

According to the first link mechanism 130 configured in this way, the first suction holder 110 is separated from the filter cloth by its own weight when the suction cleaning of the filter cloth is not performed, but when the suction cleaning process is initiated, the first suction holder 110 adheres closely to the filter cloth due to the suction force formed in the first suction holder 110.

The second link mechanism 140 is configured to support the second suction holder 120 to move in a way that the second suction holder 120 can move in a direction close to or away from the filter cloth of the one of the two adjacent disks 200b. The second link mechanism 140 comprises a pair of second links 141, the upper end of the first link 141 being hinge-coupled to the supporter 150 and the lower end of the first link 141 being hinge-coupled to the upper part of the second suction holder 110.

The second link 141 according to a preferred embodiment of the present invention consists of a first vertical portion 1411, a horizontal portion 1412, and a second vertical portion 1413, having a two-stage bent shape with a first bent portion at the boundary of the first vertical portion 1411 and the horizontal portion 1412, and a second bent portion at the boundary of the horizontal portion 1412 and the second vertical portion 1413.

More specifically, the first vertical portion 1411 has a structure in which the upper part is hinged to the supporter 150 and extends from the supporter 150 to a height corresponding to the space between the first suction holder 110 and the second suction holder 120 through the space around the side portion of the first suction holder 110 .

The horizontal portion 1412 extends in a horizontal direction from the lower portion of the first vertical portion 1411 and is protruded into the space between the first suction holder 110 and the second suction holder 120.

The second vertical portion 1413 extends from the end of the horizontal portion 1412 to the upper part of the second suction holder 120 to be hinge-coupled to the upper part of the second suction holder 120.

According to second link 141 configured in this way, a pair of second links 141 arranged in the left and right sides of the first suction holder 110 connect the supporter 150 and the second suction holder 120.

Like the first suction holder 110, the second suction holder 120 is separated from the filter cloth by its own weight when the suction cleaning of the filter cloth is not performed, but when the suction cleaning process is initiated, the second suction holder 120 adheres closely to the filter cloth due to the suction force formed in the second suction holder 120.

In a a separable two-stage vertical suction cleaning apparatus according to the present invention configured as described above, the supporter 150 is composed of a hollow tube and is connected to the first suction holder 110 via the first flexible tube 151. Therefore, the sludge sucked from the filter cloth by the first suction holder 110 is diskharged through the first flexible tube 151 and the supporter 150.

The supporter 150 is connected to the manifold 160 to discharge the sludge into the manifold 160.

Likewise, the second suction holder 120 is connected to the manifolder 160 via the second flexible tube 152, and the sludge sucked from the filter cloth by the second suction holder 120 is discharged to the manifold 160 through the second flexible tube 152.

Like the commonly used fiber disk filter, the fiber disk filter, including a separable two-stage vertical suction cleaning apparatus configured as described above, comprises a plurality of disks 200 having a plurality of sectorial shape filter segments 210 arranged in the circumferential direction on both sides. The plurality of disks 200 are installed on a rotating drum 300 at regular intervals in the longitudinal direction and the rotating drum 300 is installed in a structure forming a water tank or a water channel and is rotated by the driving unit 400 to filter the sludge in the inflow water.

The separable two-stage vertical suction cleaning apparatus 100 is installed to be located between the disk 200 and the disk 200 and the first suction holder 110 and the second suction holder 120 are arranged in an upper and lower two-stage structure so that the volume of the fiber disk filter and the area of the site required for the installation of the fiber disk filter can be significantly reduced.

The separable two-stage vertical suction cleaning apparatus 100 installed between the disks 200 implements an efficient suction washing environment while acting as follows.

The first suction holder 110 and the second suction holder 120, which constitute a separable two-stage vertical suction cleaning apparatus 100 according to the present invention, are kept apart from the filter cloth at normal times when the suction washing of the filter cloth is performed so that it is possible to prevent sludge collected in the filter cloth from being pressed and penetrated deep into the villi by the suction holder during the filtration process.

On the other hand, when the cleaning process to remove sludge collected on the filter cloth is initiated, the suction cleaning pump 500 connected to the manifold 160 is operated, and water in the manifold 160, in the supporter 150, and in the first and second suction holders 110 and 120 are discharged to the outside forming suction force in the first and second suction holders 110 and 120.

The suction cleaning pump 500 may be composed of a land pump or a underwater pump.

As described above, the suction force formed in the first and second suction holders 110 moves the first suction holder 110 to be in close contact with the filter cloth of the one-side disk 200a, and moves the second suction holder 120 to be in close contact with the filter cloth of the other disk 200b.

As described above, a separable two-stage vertical suction cleaning apparatus 100 according to the present invention and a fiber disk filter including the same can significantly reduce the volume of the fiber disk filter and the area of the site required for the installation of the fiber disk filter, and can implements an smooth and efficient suction cleaning environment.

The present disclosure is not limited to the specific exemplary embodiment described above, and various modifications can be made by any person skilled in the art to which the present disclosure pertains without departing from the subject matter of the present disclosure as claimed, and the modifications are within the scope defined by the claims.

## Claims

1. A suction cleaning apparatus that is disposed between two adjacent disks 200a and 200b configured in a fiber disk filter to suck and remove sludge collected in the filter cloth of the disks 200a and 200b, the suction cleaning apparatus comprising:
a first suction holder 110 having a first suction port 111 for suctioning sludge, the first suction holder 110 disposed to have a structure in which the first suction port 111 faces the filter cloth of one of the two adjacent disks 200a and 200b;
a second suction holder 120 having a second suction port 121 for suctioning sludge, the second suction holder 120 disposed to have a structure in which the second suction port 121 faces the filter cloth of the other one of the two adjacent disks 200a and 200b;
a supporter 150 for supporting the first suction holder 110 and the second suction holder 120 in a horizontal position;
a first link mechanism 130 connecting the first suction holder 110 located under the supporter 150 to the supporter 150 in a way that the first suction holder 110 can move in a direction close to or away from the filter cloth of the one of the two adjacent disks 200a and 200b; and
a second link mechanism 140 connecting the second suction holder 120 located under the supporter 150 to the supporter 150 in a way that the second suction holder 120 disposed below the first suction holder 110 can move in a direction close to or away from the filter cloth of the other one of the two adjacent disks 200a and 200b.

2. The suction cleaning apparatus according to claim 1, wherein the second link mechanism 140 comprises a pair of second links 141 having a two-stage bent shape to connect the supporter 150 and the second suction holder 120,
wherein the second link 141 comprises :
a first vertical portion 1411 extending from the supporter 150 to a height corresponding to a space between the first suction holder 110 and the second suction holder 120 through a space around the side of the first suction holder (110);
a horizontal portion 1412 extending horizontally from the lower end of the first vertical portion 1411 into a space between the first suction holder 110 and the second suction holder 120; and
a second vertical portion 1413 extending from the end of the horizontal portion 1412 to the upper part of the second suction holder 120 to be connected to the second suction holder 120.

3. The suction cleaning apparatus according to claim 1, wherein the first suction holder 110 and the second suction holder 120 are configured to be close contact with the filter cloths by suction force formed in the suction ports thereof when suction cleaning is carried out, and to be spaced apart separated from the filter cloth by their own weight when suction cleaning is not carried out.

4. A fiber disk filter comprising :
a plurality of filter segments 210 having filter cloths installed on the front and rear sides;
a plurality of disks 200 having the plurality of filter segments 210 arranged in the circumferential direction;
a rotating drum 300 having the plurality of disks 200 installed at regular intervals in the longitudinal direction;
a driving unit 400 to drive the rotating drum 300; and
a suction cleaning apparatus according to any one of claims 1 to 3 disposed between the two adjacent disks 200.
